# EUROPÄISCHE PATENTSCHRIFT

(11) **EP 2 762 303 B1**
(45) Veröffentlichungstag und Bekanntmachung des Hinweises auf die Patenterteilung: **11.05.2016**
(21) Anmeldenummer: 14000391.4
(22) Anmeldetag: 04.02.2014
(51) Int. Cl.: B32B 15/08, B67B 3/26

(54) **Vorrichtung und Verfahren zum Anbringen eines Schraubdeckels an einem Behälter sowie kapazitive Siegelfolie**
Device and method for applying a screw closure to a container as well as sealable capacitiv foil
Dispositif et methode pour boucher un récipient et film étanche capacitif

(30) Priorität: 05.02.2013 DE 102013101129
(43) Veröffentlichungstag der Anmeldung: 06.08.2014
(73) Patentinhaber: Heinz-Glas Group Holding HGGH GmbH & Co. KGaA, 96355 Tettau (DE)
(72) Erfinder: Rebhan, Helmut, 96317 Kronach (DE)
(74) Vertreter: Schneider, Andreas

(56) Entgegenhaltungen:
- WO-A1-2011/030211
- US-A1- 2005 022 478
- US-A1- 2006 141 244

## Beschreibung

Die Erfindung betrifft eine Vorrichtung und ein Verfahren zum Steuern einer Maschine zum Anbringen eines Schraubdeckels an einem Behälter, dessen Mündung mit einer Siegelfolie verschlossen ist. Darüber hinaus betrifft die Erfindung eine Maschine mit einer solchen Vorrichtung sowie die Verwendung einer Siegelfolie. Schließlich betrifft die Erfindung eine Vorrichtung und Verfahren zur Überprüfung der Anbringung eines Schraubdeckels an einem Behälter.
Maschinen zum Anbringen eines Schraubdeckels an einem Behälter sind z. B. aus der WO 2011/030211 A1 bekannt. Sie umfassen eine Verschließeinrichtung zum Aufbringen eines Drehmomentes auf den Schraubdeckel sowie eine Drehmomentsteuerung für das auf den Schraubverschluß aufgebrachte Drehmoment. Dabei wird ein Schraubdeckel auf einen Behälter aufgesetzt und festgeschraubt. Die Drehbewegung zwischen Schraubdeckel und Behälter wird beendet, wenn ein vorgegebenes Drehmoment erreicht ist. Die Drehmomentbegrenzung erfolgt dabei beispielsweise mit Hilfe einer durch Feder- oder Magnetkraft wirkenden Kupplung.
Durch ein bestimmtes Anzugsmoment soll einerseits die Dichtheit des Verschlusses gewährleistet werden. Andererseits soll das zum ersten Öffnen des Schraubdeckels erforderliche Öffnungsmoment festgelegt werden.

Eine Maschine zur Überprüfung der Anbringung eines Schraubdeckels ist z.B. aus der US 2005/0022478 A1 bekannt.

Um den Behälterinhalt zusätzlich vor Umwelteinflüssen zu schützen, kann die Mündung des Behälters mit einer Siegelfolie verschlossen werden. Nach dem Öffnen des Schraubdeckels zeigt die unbeschädigte Siegelfolie dem Kunden die Originalität und Unversehrtheit des Produktes.

Siegelfolien werden beispielsweise bei der Aufbewahrung trockener Lebensmittel, wie z. B. Pulverkaffee oder Trockenmilch, verwendet, da sie einen sicheren Schutz vor Feuchtigkeit bietet. Gleiches gilt im besonderen Maße auch für Arzneimittel und ähnliche Produkte, wie beispielsweise Nahrungsergänzungsmittel.

Die Siegelfolie ist üblicherweise mehrlagig aufgebaut und umfaßt typischerweise eine Metallschicht und eine Kunststoffschicht. Beispielsweise umfaßt sie eine Oberschicht aus einem Aluminiummaterial und eine als Verbindungsschicht dienende Unterschicht aus einem Kunststoffmaterial. Ober- und Unterschicht können dabei über einen Haftvermittler als Zwischenschicht miteinander verbunden sein.

Damit die Verbindungsschicht der Siegelfolie die gewünschte feste Verbindung mit der Mündung des Behälters, insbesondere eines Glasbehälters, eingeht, wird die Mündungsoberfläche vor dem Aufbringen der Siegelfolie mit einem speziellen Material beschichtet. Während des Versiegelungsvorgangs erfolgt dann eine Erwärmung der Verbindungsschicht, so daß diese sich mit den reaktiven Komponenten der Mündungsbeschichtung verbindet. Die Erwärmung der Verbindungsschicht erfolgt zumeist indirekt durch eine Erwärmung der benachbarten metallischen Oberschicht. Hierzu sind verschiedene Verfahren bekannt. So kann ein direkter Wärmeeintrag in die Aluminiumschicht mit Hilfe eines konduktiven Siegelkopfes bei direkter Berührung der Siegelfolie erfolgen. Eine andere Technik sieht einen berührungslosen Energieeintrag in die Siegelfolie mit Hilfe eines zur induktiven Erwärmung der Oberschicht ausgebildeten Siegelkopfes vor. Die berührungslose, induktive Erwärmung hat sich als besonders vorteilhaft erwiesen. Dabei wird die Druckkraft, die sicherstellt, daß die Siegelfolie an der gesamten Mündungsfläche anliegt, von dem Schraubdeckel auf die Siegelfolie ausgeübt. Vor dem Versiegeln muß daher der Schraubdeckel mit einem bestimmten Drehmoment auf die Mündung aufgeschraubt werden.

Bei den aus dem Stand der Technik bekannten Verfahren bleiben beim Aufbringen des Drehmomentes aus den Schraubdeckel zumeist Neben- und Begleiteffekte unberücksichtigt, welche Einfluß auf das Anzugsmoment haben können. So bleibt insbesondere das Rückstellmoment des Schraubdeckels unberücksichtigt. Einfluß auf die Stärke dieses Rückstellmoments hat unter anderem die für die Herstellung des Schraubdeckels verwendete Kunststoffmischung. Trotz identischer Bezeichnung enthalten nämlich Kunststoffmischungen oftmals einen unterschiedlichen Anteil an Gleitmittel. Auch die Oberflächenvergütung des Behälters, insbesondere bei Glasbehältern, im Bereich des Gewindeganges beeinflußt das Rückstellmoment des Schraubdeckels. Zudem ist das Aufbringen des richtigen Anzugsmoments auch davon abhängig, ob der Behälter von einer Haltevorrichtung tatsächlich in der gewünschten Position relativ zu der Verschließvorrichtung gehalten wird oder ob die Haltevorrichtung den Behälter schräg zur der Verschließrichtung oder in einer anderen anweichenden Position hält.

In US 2006/141244 A1 ist der mehrschichtige Aufbau einer Folie beschrieben, die für Verpackungszwecke oder zur Herstellung von Kondensatoren verwendet werden kann. Dabei ist eine Polymerharzschicht von zwei Metallschichten begrenzt.

Eine Aufgabe der vorliegenden Erfindung ist es, eine Technologie bereitzustellen, die ein behälterindividuelles und situationsangepaßtes Anbringen eines Schraubdeckels und/oder eine sichere Überprüfung der ordnungsgemäßen Anbringung der Schraubdeckel an einem Behälter ermöglicht. Diese Aufgabe wird durch die in den unabhängigen Ansprüchen angegebenen Erfindungsgegenstände gelöst.

Vorteilhafte Ausführungen der Erfindung sind in den Unteransprüchen angegeben.

Die im Folgenden im Zusammenhang mit den Verfahren erläuterten Vorteile und Ausgestaltungen gelten sinngemäß auch für die erfindungsgemäßen Vorrichtungen und umgekehrt.

Eine Kernidee der Erfindung ist es, die Siegelfolie derart schichtweise aufzubauen, daß der Schichtaufbau einen Kondensator bildet. Hierzu umfaßt der Schichtaufbau wenigstens eine erste elektrisch leitfähige Schicht, wenigstens eine zweite elektrisch leitfähige Schicht und wenigstens eine zwischen der ersten elektrisch leitfähigen Schicht und der zweiten elektrisch leitfähigen Schicht angeordnete elektrisch isolierende Schicht derart, daß die elektrisch leitfähigen Schichten als Elektroden des Kondensators und die elektrisch isolierende Schicht als Dielektrikum des Kondensators dienen.

Ist die elektrisch isolierende Schicht derart komprimierbar, daß eine Änderung der Schichtdicke die Kapazität des Kondensators beeinflußt, so kann während des Aufbringens eines Drehmoments auf den Schraubverschluß durch eine Messung und eine Auswertung des Meßergebnisses ermittelt werden, ob ein ausreichendes Drehmoment auf den Schraubverschluß aufgebracht wird und es kann während des Aufbringens des Drehmoments eine Regelung des von der Verschließeinrichtung auf den Schraubverschluß aufgebrachten Drehmoments in Abhängigkeit von dem Meßergebnis erfolgen und/oder es kann nach dem Aufbringen des Drehmoments durch eine Messung kontrolliert werden, ob ein ausreichendes Drehmoment auf den Schraubdeckel aufgebracht wurde bzw. ob zum Zeitpunkt der Überprüfung der Schraubdeckel ordnungsgemäß mit dem Behälter verbunden ist. In beiden Fällen kann zu den beschriebenen Zwecken ein gemessener Ist-Wert mit einem Soll-Wert verglichen werden.
Gemessen wird dabei eine Eigenschaft des Kondensators, vorzugsweise eine elektrische Eigenschaft des Kondensators, insbesondere die geänderte Kapazität des Kondensators, und/oder eine Eigenschaft eines von dem Kondensator beeinflußten oder mit dem Kondensator in Wechselwirkung stehenden Systems, insbesondere die Stärke des Einflusses des Kondensators auf ein elektrisches oder magnetisches Meßfeld. In einer Ausführungsform der Erfindung weist die Siegelfolie eine Spule auf, die zusammen mit dem Kondensator einen elektrischen Schwingkreis bildet, dessen Resonanzfrequenz von der Kapazität des Kondensators abhängig ist. In einer anderen Ausführungsform der Erfindung wird die den Kondensator aufweiserde Siegelfolie einem Meßfeld ausgesetzt, ohne daß der Kondensator mit einer Spule als zusätzliches Bauelement versehen ist. Mit anderen Worten ist das Vorhandensein eines Schwingkreises an der Siegelfolie für eine Messung der Beeinflussung des Meßfeldes bzw. der Wechselwirkung der Siegelfolie mit dem Meßfeld nicht zwingend erforderlich.
Die Messung erfolgt mit Hilfe einer geeigneten Meßeinrichtung. Aufbau und Funktion derartiger Meßeinrichtungen sind dem Fachmann bekannt. Das Messen erfolgt dabei berührungslos, so daß der Schraubdeckel oder ein anderer Verschluß für die Messung nicht entfernt werden muß.

Es ist daher nicht nur möglich, das Drehmoment während des Anbringens eines Schraubdeckels bei ausgewählten, vorzugsweise jedoch allen Behältern zu regeln, wobei die Regelung des Drehmoments behälterindividuell, d. h. beispielsweise unter Berücksichtigung der konkreten Kunststoffmischung des Schraubdeckels und der konkreten Oberflächenvergütung des Behälters, und situationsangepaßt, d. h. beispielsweise unter Berücksichtigung der konkreten Positionierung des Behälters durch eine Haltevorrichtung, erfolgen kann.

Es ist darüber hinaus auch möglich, im Anschluß an das Anbringen des Schraubdeckels eine sichere Überprüfung der Anbringung des Schraubdeckels durchzuführen, ohne den Schraubdeckel wieder abzunehmen und damit eventuell die Siegelfolie und damit den Verschluß der Mündung zu zerstören. Somit muß diese Überprüfung ebenfalls nicht auf Strichproben beschränkt bleiben. Statt dessen kann ein beliebiger Anteil aller Versiegelungen einer Abfüllanlage überprüft werden. Insbesondere ist es auch möglich, alle Versiegelungen zu überprüfen. Werden alle Behälter aussortiert, bei denen der Schraubdeckel nicht ordnungsgemäß angebracht wurde, kann die geprüfte ordnungsgemäße Anbringung der Schraubdeckel bei der gesamten Produktion garantiert werden.

Erfingdungsgemäß wird für die elektrisch isolierenden Schicht ein Material verwendet, welches sich derart komprimieren läßt, daß sich die Schichtdicke und damit die Stärke des Dielektrikums in einem Maße verändert, daß sich der Abstand der Elektroden zueinander derart verändert, daß eine signifikante Änderung der Kapazität des Kondensators die Folge ist. Vorzugsweise ist das Schichtmaterial zudem plastisch derart, daß die Komprimierung reversibel ist, wenn auf den Schraubdeckel ein Rückstelldrehmoment wirkt. Somit kann nicht nur eine maximale Komprimierung der dielektrischen Schicht, sondern auch eine erneute Schichtdickenzunahme erfaßt und bei dem Aufbringen des gewünschten Drehmoments auf den Schraubdeckel berücksichtigt und/oder bei einer späteren Überprüfung erkannt werden.

In einer Ausführungsform der Erfindung wird mit Hilfe eines Lesegerätes oder Detektors ein magnetisches Wechselfeld in einem geeigneten Frequenzbereich erzeugt. Befindet sich dieses Meßfeld in ausreichender Nähe zur Siegelfolie und bildet der Kondensator zusammen mit einer Spule einen Schwingkreis, so wird über die Spule des Schwingkreises Energie aus dem Meßfeld in den Schwingkreis eingekoppelt. Entspricht die Frequenz des Wechselfeldes der Resonanzfrequenz des Schwingkreises, wird der Schwingkreis zu einer Resonanzschwingung angeregt. Der dadurch im Schwingkreis fließende Strom wirkt seiner Ursache, also dem von außen einwirkenden magnetischen Wechselfeld, entgegen. Dieser Effekt führt letztendlich zu einer Abschwächung der meßbaren magnetischen Feldstärke. Auch in einer optionalen Sensorspule ist eine Änderung der induzierten Spannung meßbar, sobald ein resonanter Schwingkreis in das magnetische Feld der Generatorspule eingebracht wird. Durch eine gezielte Veränderung der Frequenz des Erregerfeldes kann somit die Resonanzfrequenz des Schwingkreises und damit die Kapazität des Kondensators des Schwingkreises ermittelt werden. Eine detektierbare Beeinflussung des Meßfeldes liegt jedoch auch dann vor, wenn die Siegelfolie keinen Schwingkreis aufweist, sondern sich lediglich der Kondensator in dem Meßfeld befindet.

In beiden Fällen läßt sich mit Hilfe einer geeigneten Meßmethode feststellen, wie stark der eine geänderte Kapazität aufweisende Kondensator Kenngrößen bzw. Eigenschaften des Meßfeld beeinflußt, im Vergleich zu der Beeinflussung des Meßfeldes durch den Kondensator vor einem Energieeintrag. Dabei befindet sich der Kondensator entweder innerhalb des Meßfeldes oder er ist derart in der Nähe des Meßfeldes angeordnet, daß die gewünschte meßbare Änderung der Feldeigenschaft eintritt.

Mit Hilfe der Meßergebnisse kann einerseits während des Anbringens des Schraubdeckels eine Regelung der Verschließvorrichtung erfolgen. Insbesondere erfolgt eine Ansteuerung eines Elektromotors der Verschließeinrichtung, welcher Elektromotor einen Verschließkopf antreibt, mit dem das Drehmoment auf den Schraubdeckel aufgebracht wird. Aus dem Meßergebnissen kann andererseits im Anschluß an das Anbringen des Schraubdeckels ermittelt werden, ob ein gewünschtes, ordnungsgemäßes Drehmoment auf den Schraubdeckel aufgebracht wurde.

Für die Auswertung des Meßergebnisses kommt in beiden Fällen eine geeignete Auswerte- und/oder Regeleinrichtung zum Einsatz, beispielsweise eine mit einer Schnittstelle zur Übergabe der Meßergebnisse ausgestattete Datenverarbeitungseinheit, in der die gewünschte Funktionalität entweder in Form von Computerhardware oder in Form von Computersoftware oder in einer Kombination aus Hardware und Software verwirklicht wird. Aufbau und Funktion derartiger Auswerteinrichtungen sind dem Fachmann bekannt.

In einer Ausführungsform der Erfindung wird der gemessene Ist-Wert mit einem Soll-Wert verglichen. Dabei können erlaubte Abweichungen von dem Soll-Wert vorab festgelegt werden. Bewegt sich der Meßwert in einem zulässigen Toleranzbereich um den Referenzwert, wird die Versiegelung als gut bewertet.
Es ist jedoch nicht zwingend notwendig, die Kapazität des Kondensators und/oder die Beeinflussung des Meßfeldes in absoluten Werten zu erfassen. Für eine Bewertung des Drehmomentes kann es ausreichend sein, die Veränderung der Kapazität und/oder die Beeinflussung des Meßfeldes gegenüber einem Ausgangswert zu ermitteln. Dabei kann es sich bei dem Ausgangswert um einen vor dem Aufbringen des Drehmomentes ermittelten, gegebenenfalls auch gefäßindividuellen Meßwert der Kapazität und/oder einer Meßfeldeigenschaft oder um einen auf der Grundlage von Berechnungen und/oder früheren Messungen festgesetzten Wert handeln, beispielsweise um einen aus einer Meßreihe ermittelten Durchschnittswert.

Die Siegelfolie könnte auch in Verbindung mit anderen Schraubverschlüssen verwendet werden. Auch kann die Siegelfolie bei unterschiedlichen Versiegelungsverfahren eingesetzt werden.
Bei Verschlüssen, die nicht durch Verschrauben, sondern auf andere Art und Weise mit dem Behälter verbunden werden, ist das Prinzip der Erfindung zwar ebenfalls anwendbar, soweit es sich auf die Überprüfung der Anbringung eines solchen Verschlusses an einem Behälter bezieht, dies ist aber nicht erfindungsgemäß. Zwar ist dann ein Ansteuern einer Maschine zum Verschrauben nicht erforderlich. Jedoch kann das der Erfindung zugrundeliegende Prinzip auch angewendet werden, wenn durch das Verschließen eine Siegelfolie komprimiert wird. Dies kann beispielsweise bei Verschlüssen der Fall sein, die mit dem Behälter unter Ausbildung einer Rast-, Schnapp-, Steck- oder Klemmverbindung verbunden werden.
Mit der vorliegende Erfindung läßt sich nicht nur eine Regelung des Drehmomentes beim Anbringen eines Schraubdeckels und eine Überprüfung des korrekten Drehmomentes bei erfolgter Anbringung des Schraubdeckels durchführen, ohne daß dafür die Versiegelung zerstört werden muß. Da die Überprüfung berührungslos durchführbar ist, kann sie auch am fertigen Produkt erfolgen, d. h. nach Abschluß des Abfüllvorgangs, wenn der Behälter, beispielsweise das Glasgefäß, bereits vollständig verschlossen und unter Umständen auch bereits verpackt ist. Die Überprüfung des Drehmoments muß nicht in unmittelbarem räumlichen oder zeitlichen Zusammenhang mit der Abfüllung, der Versiegelung und dem Anbringen der Schraubdeckel stehen. Sie kann auch zu einem späteren Zeitpunkt durchgeführt werden.
Unter einer "elektrisch isolierenden Schicht" wird verstanden, daß die elektrischen Eigenschaften des Schichtmaterials für die Anwendung als Dielektrikum in einem Kondensators geeignet sind. Eine "elektrisch isolierende Schicht" im Sinne der Erfindung kann daher aus einer elektrisch nicht leitenden oder auch aus einer elektrisch schwach leitenden, nichtmetallischen Substanz bestehen.

Die Erfindung ist beim Verschließen unterschiedlicher Behälter einsetzbar. Als besonders vorteilhaft hat sich der Einsatz bei Glasgefäßen erwiesen.

Ein Ausführungsbeispiel der Erfindung wird nachfolgend anhand der Zeichnungen näher erläutert. Hierbei zeigen:
- Fig. 1: eine Siegelfolie (Stand der Technik) im Schnitt,
- Fig. 2: eine Siegelfolie mit neuem Aufbau im Schnitt,
- Fig. 3: eine Darstellung einer Maschine zum Anbringen eines Schraubdeckels an einem Behälter,
- Fig. 4: eine Darstellung einer Vorrichtung zur Überprüfung der Anbringung eines Schraubdeckels.

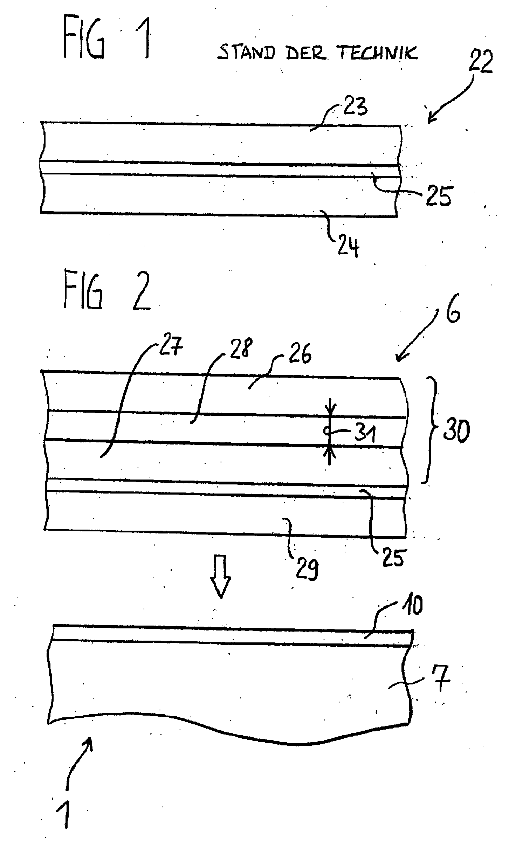

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.
Eine Siegelfolie 22, wie sie aus dem Stand der Technik bekannt ist, zeigt Fig. 1. Sie umfaßt eine Oberschicht 23 aus einem Aluminiummaterial und eine als Verbindungsschicht dienende Unterschicht 24 aus einem Kunststoffmaterial. Ober- und Unterschicht 23, 24 sind über einen Haftvermittler als Zwischenschicht 25 miteinander verbunden.

In Fig. 2 ist der Aufbau der Siegelfolie 6 in einer bevorzugten Ausführungsform dargestellt. Die Siegelfolie 6 ist schichtweise aufgebaut derart, daß ein Kondensator 30 gebildet wird. Der Schichtaufbau umfaßt eine erste (mündungsferne) elektrisch leitfähige Schicht 26, eine zweite (mündungsnahe) elektrisch leitfähige Schicht 27, die der Oberschicht 23 entspricht, und eine zwischen der ersten elektrisch leitfähigen Schicht 26 und der zweiten elektrisch leitfähigen Schicht 27 angeordnete elektrisch isolierende Schicht 28, wobei die elektrisch leitfähigen Schichten 26, 27 als Elektroden des Kondensators 30 und die elektrisch isolierende Schicht 28 als Dielektrikum des Kondensators 30 dienen. Unter der zweiten elektrisch leitfähigen Schicht 27 ist wieder eine Schicht 29 aus einem Kunststoffmaterial vorgesehen, die der Unterschicht 24 entspricht, wobei diese beiden Schichten 27, 29, wie aus dem Stand der Technik bekannt, über einen Haftvermittler als Zwischenschicht 25 miteinander verbunden sind. Die Kunststoffschicht 29 der Siegelfolie 6 verbindet sich während eines Energieeintrags bei der Versiegelung mit den reaktiven Komponenten einer auf der Mündung 7 des Glasgefäßes 1 angebrachten Mündungsbeschichtung 10.

Bei den elektrisch leitfähigen Schichten 26, 27 handelt es sich vorzugsweise um metallische Schichten, insbesondere um Schichten aus einem Aluminiummaterial. Die als Dielektrikum des Kondensators 30 dienenden elektrisch isolierende Schicht 28 besteht vorzugsweise aus einem geeigneten Kunststoffmaterial. Als besonders geeignet hat sich dabei die Verwendung von Hart-Polyethylen, kurz PE-HD (HDPE), herausgestellt. Dabei handelt es sich vorteilhafterweise um das gleiche Material, aus dem auch die Kunststoffschicht 29 besteht, mit der die Siegelfolie 6 auf der Mündung 7 anliegt. Das Dielektrikum 28 ist in einer Weise komprimierbar, daß sich bei einer Änderung der Schichtdicke 31 des Dielektrikums 28 die Kapazität des Kondensators 30 ändert.

Ändert sich die Schichtdicke 31 des Dielektrikums 28, so verändert sich der Abstand der beiden als Elektroden des Kondensators 30 dienenden elektrisch leitfähigen Schichten 26, 27 und damit die Kapazität des Kondensators 30.

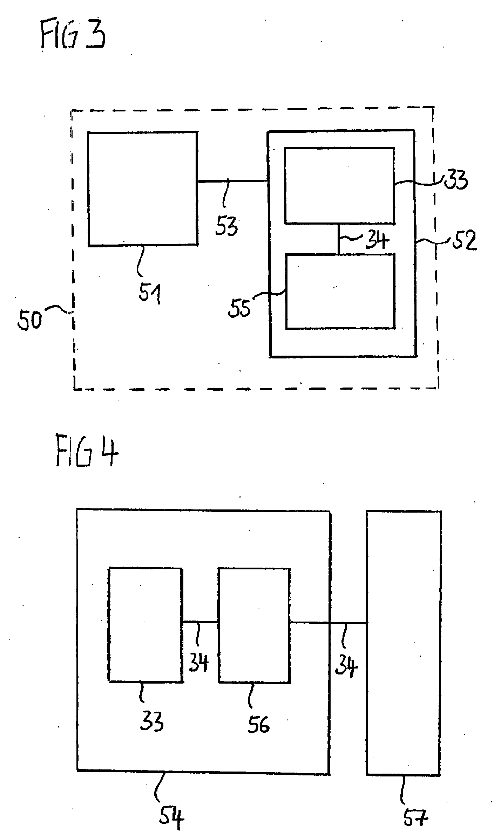

Eine Maschine 50 zum Anbringen eines Schraubdeckels an dem Glasgefäß 1, dessen Mündung 7 mit der Siegelfolie 6 verschlossen ist, zeigt Fig. 3. Die Maschine 50 umfaßt eine Verschließeinrichtung 51 zum Aufbringen eines Drehmomentes auf den Schraubdeckel. Darüber hinaus umfaßt die Maschine eine mit der Verschließeinrichtung 51 über eine Anschlußleitung 53 verbundene Steuervorrichtung 52 zum Steuern der Maschine 50.

In einer Ausführungsform der Erfindung erfolgt das Messen des Einflusses des Kondensators 30 auf ein elektromagnetisches Meßfeld mit Hilfe einer Meßeinrichtung 33, siehe Fig. 3, wobei die Meßeinrichtung 33 beispielsweise einen für die Messung geeigneten Meßfeldgenerator mit Vorrichtungen zum Erfassen der Feldeigenschaften aufweist. Die Meßeinrichtung 33 ist Teil der Steuervorrichtung 52. Zum Messen der Beeinflussung des Meßfeldes durch den Kondensator 30 wird entweder die Meßeinrichtung 33 in die Nähe jeder einzelnen Mündung 7 gebracht und/oder die zu überprüfenden Glasgefäße 1 werden nacheinander in eine geeignete Prüfposition relativ zu der Meßeinrichtung 33 gebracht. Vorteilhafterweise befindet sich die Meßeinrichtung 33 in unmittelbarer Nähe der Verschließeinrichtung 51 und damit zum Zeitpunkt des Anbringens des Schraubdeckels auf der Mündung 7 in unmittelbarer Mündungsnähe.

Die Steuervorrichtung 52 umfaßt neben der Meßeinrichtung 33 eine über eine Anschlußleitung 34 mit der Meßeinrichtung 33 verbundenen Auswerte- und Regeleinrichtung 55. Mit Hilfe dieser auswerte- und Regeleinrichtung 55 wird durch einen Vergleich des Meßergebnisses mit einem Referenzwert ermittelt, ob die Verschließeinrichtung 51 das gewünschte Drehmoment auf den Schraubdeckel aufbringt. Darüber hinaus regelt die Auswerte- und Regeleinrichtung 55 die Verschließeinrichtung 51, genauer gesagt das Aufbringen des Drehmoments auf den Schraubdeckel durch die Verschließeinrichtung 51, in Abhängigkeit von dem Meßergebnis. Die Regelung erfolgt dabei derart, daß stets und unabhängig von behälterindividuellen Besonderheiten das gewünschte optimale Anzugsmoment erreicht wird.

Eine Vorrichtung 54 zur Überprüfung der Anbringung eines Schraubdeckel an dem Glasgefäß 1 zeigt Fig. 4. Neben der bereits im Zusammenhang mit der Maschine 50 zum Anbringen des Schraubdeckels an dem Glasgefäß 1 beschriebenen Meßeinrichtung 33 umfaßt die Vorrichtung 54 eine Auswerteeinrichtung 56, die der oben beschriebenen Auswerte- und Regeleinrichtung 55 weitestgehend entspricht; lediglich die Komponenten zur Regelung der Verschließeinrichtung 51 werden in diesem Fall nicht benötigt. Statt dessen ermittelt die Auswerteeinrichtung 56, ob der Schraubdeckel die Siegelfolie mit einem Anpreßdruck beaufschlagt, der als ausreichend für eine ordnungsgemäße Anbringung des Schraubdeckels an dem Glasgefäß 1 angesehen wird.

Die Auswerteeinrichtung 56 ist vorteilhafterweise mit einer Sortiereinrichtung 57 verbunden, die auf ein entsprechendes Signal der Auswerteeinrichtung 56 hin diejenigen Glasgefäße 1, deren Schraubdeckel nicht ordnungsgemäß angebracht sind, aussortiert. Die Vorrichtung 54 zur Überprüfung der Anbringung eines Schraubdeckels wird typischerweise zeitlich und/oder räumlich getrennt von der Maschine 50 zum Anbringen eines Schraubdeckel eingesetzt.

### Bezugszeichenliste

- 1: Glasgefäß
- 6: Siegelfolie
- 7: Mündung
- 10: Mündungsbeschichtung
- 22: Siegelfolie (Stand der Technik)
- 23: Oberschicht
- 24: Unterschicht
- 25: Zwischenschicht
- 26: mündungsferne leitfähige Schicht
- 27: mündungsnahe leitfähige Schicht
- 28: isolierende Schicht, Dielektrikum
- 29: Verbindungsschicht, Kunststoffschicht
- 30: Kondensator
- 31: Schichtdicke
- 50: Maschine zum Anbringen des Schraubdeckels
- 51: Verschließeinrichtung
- 52: Steuervorrichtung
- 53: Anschlußleitung
- 54: Vorrichtung zur Überprüfung des Schraubdeckels
- 55: Auswerte- und Regeleinrichtung
- 56: Auswerteeinrichtung
- 57: Sortiereinrichtung

## Patentansprüche

1. Vorrichtung (52) zum Steuern einer Maschine (50) zum Anbringen eines Schraubdeckels an einem Behälter (1), dessen Mündung (7) mit einer Siegelfolie (6) verschlossen ist, welche Maschine (50) eine Verschließeinrichtung (51) zum Aufbringen eines Drehmomentes auf den Schraubdeckel umfaßt,
- mit einer Meßeinrichtung (33) zum berührungslosen Messen der Kapazität eines Kondensators (30) und/oder einer Eigenschaft eines von einem Kondensator (30) beeinflussten oder mit einem Kondensator (30) in Wechselwirkung stehenden Systems, insbesondere zum Messen der Stärke des Einflusses eines solchen Kondensators (30) auf ein Messfeld; wobei der Kondensator (30) durch einen Schichtaufbau gebildet ist, welcher Schichtaufbau eine erste elektrisch leitfähige Schicht (26) der Siegelfolie (6), eine zweite elektrisch leitfähige Schicht (27) der Siegelfolie (6) und eine zwischen der ersten elektrisch leitfähigen Schicht (26) und der zweiten elektrisch leitfähigen Schicht (27) angeordnete elektrisch isolierende Schicht (28) der Siegelfolie (6) umfaßt,
- mit einer Auswerte- und Regeleinrichtung (55) zum Auswerten des Meßergebnisses, insbesondere zum Vergleichen eines Meßwertes mit einem Referenzwert, und zum Regeln des von der Verschließeinrichtung (51) auf den Schraubverschluß aufgebrachten Drehmoments in Abhängigkeit von dem Meßergebnis.

2. Maschine (50) zum Anbringen eines Schraubdeckels (8) an einem Behälter, dessen Mündung (7) mit einer Siegelfolie (6) verschlossen ist, mit einer Verschließeinrichtung (51) zum Aufbringen eines Drehmomentes auf den Schraubdeckel und mit einer Vorrichtung (52) nach Anspruch 1.

3. Verwendung einer Siegelfolie (6) zur Versiegelung der Mündung (7) von offenen Behältern, insbesondere Glasgefäßen (1), wobei die Siegelfolie (6) einen Schichtaufbau aufweist, welcher Schichtaufbau eine erste elektrisch leitfähige Schicht (26), eine zweite elektrisch leitfähige Schicht (27) und eine zwischen der ersten elektrisch leitfähigen Schicht (26) und der zweiten elektrisch leitfähigen Schicht (27) angeordnete elektrisch isolierende Schicht (28) umfaßt derart, daß der Schichtaufbau einen Kondensator (30) bildet, wobei die elektrisch isolierende Schicht (28) mittels eines auf die Mündung (7) aufschraubbaren, die Siegelfolie (6) mechanisch beaufschlagenden Schraubdeckels derart komprimiert wird, daß sich die Kapazität des Kondensators (30) ändert.

4. Verfahren zum Steuern einer Maschine (50) zum Anbringen eines Schraubdeckels an einem Behälter (1), dessen Mündung (7) mit einer Siegelfolie (6) verschlossen ist, **gekennzeichnet durch**
- ein Aufbringen eines Drehmomentes auf den Schraubdeckel mit Hilfe einer Verschließeinrichtung (51),
- ein berührungsloses Messen der Kapazität eines Kondensators (30) und/oder einer Eigenschaft eines von einem Kondensator (30) beeinflussten oder mit einem Kondensator (30) in Wechselwirkung stehenden Systems, insbesondere zum Messen der Stärke des Einflusses eines solchen Kondensators (30) auf ein Messfeld; wobei der Kondensator (30) **durch** einen Schichtaufbau gebildet ist, welcher Schichtaufbau eine erste elektrisch leitfähige Schicht (26) der Siegelfolie (6), eine zweite elektrisch leitfähige Schicht (27) der Siegelfolie (6) und eine zwischen der ersten elektrisch leitfähigen Schicht (26) und der zweiten elektrisch leitfähigen Schicht (27) angeordnete elektrisch isolierende Schicht (28) der Siegelfolie (6) umfaßt,
- ein Auswerten des Meßergebnisses, insbesondere ein Vergleichen eines Meßwertes mit einem Referenzwert, sowie ein Regeln des von der Verschließeinrichtung auf den Schraubverschluß aufgebrachten Drehmoments in Abhängigkeit von dem Meßergebnis mit Hilfe einer Auswerte- und Regeleinrichtung (55).

5. Verfahren nach Anspruch 4, **dadurch gekennzeichnet, dass** die elektrisch isolierende Schicht (28) während des Messens mit Hilfe des die Siegelfolie (6) mechanisch beaufschlagenden Schraubdeckels derart komprimiert wird, daß sich die Kapazität des Kondensators (30) ändert.

6. Vorrichtung (54) zur Überprüfung der Anbringung eines Schraubdeckels an einem Behälter, dessen Mündung (7) mit einer Siegelfolie (6) verschlossen ist, **gekennzeichnet durch**
- eine Meßeinrichtung (33) zum berührungslosen Messen der Kapazität eines Kondensators (30) und/oder einer Eigenschaft eines von einem Kondensator (30) beeinflussten oder mit einem Kondensator (30) in Wechselwirkung stehenden Systems, insbesondere zum Messen der Stärke des Einflusses eines solchen Kondensators (30) auf ein Messfeld; wobei der Kondensator (30) **durch** einen Schichtaufbau gebildet ist, welcher Schichtaufbau eine erste elektrisch leitfähige Schicht (26) der Siegelfolie (6), eine zweite elektrisch leitfähige Schicht (27) der Siegelfolie (6) und eine zwischen der ersten elektrisch leitfähigen Schicht (26) und der zweiten elektrisch leitfähigen Schicht (27) angeordnete elektrisch isolierende Schicht (28) der Siegelfolie (6) umfaßt, und
- eine Auswerteeinrichtung (56), ausgebildet zum Auswerten des Meßergebnisses, insbesondere zum Vergleichen eines Meßwertes mit einem Referenzwert.

7. Verfahren zur Überprüfung der Anbringung eines Schraubdeckels an einem Behälter (1), dessen Mündung (7) mit einer Siegelfolie (6) verschlossen ist, **gekennzeichnet durch**
- ein berührungsloses Messen der Kapazität eines Kondensators (30) und/oder einer Eigenschaft eines von einem Kondensator (30) beeinflussten oder mit einem Kondensator (30) in Wechselwirkung stehenden Systems, insbesondere zum Messen der Stärke des Einflusses eines solchen Kondensators (30) auf ein Messfeld; wobei der Kondensator (30) **durch** einen Schichtaufbau gebildet ist, welcher Schichtaufbau eine erste elektrisch leitfähige Schicht (26) der Siegelfolie (6), eine zweite elektrisch leitfähige Schicht (27) der Siegelfolie (6) und eine zwischen der ersten elektrisch leitfähigen Schicht (26) und der zweiten elektrisch leitfähigen Schicht (27) angeordnete elektrisch isolierende Schicht (28) der Siegelfolie (6) umfasst,
und
- ein Auswerten des Messergebnisses, insbesondere ein Vergleichen eines Messwertes mit einem Referenzwert.

8. Verfahren nach Anspruch 7, **dadurch gekennzeichnet, dass** die elektrisch isolierende Schicht (28) vor dem Messen mit Hilfe eines auf die Mündung (7) aufschraubbaren, die Siegelfolie (6) mechanisch beaufschlagenden Schraubdeckels derart komprimiert wird, dass sich die Kapazität des Kondensators (30) ändert.

## Claims

1. Device (52) for controlling a machine (50) for applying a screw closure to a container (1), the mouth (7) of which is closed with a sealing foil (6), which machine (50) comprises a closing means (51) for applying a torque to the screw closure,
- having a measuring device (33) for the contactless measurement of the capacitance of a capacitor (30) and/or a property of a system that is influenced by a capacitor (30) or interacts with a capacitor (30), in particular for measuring the intensity of the influence of such a capacitor (30) on a measuring field; wherein the capacitor (30) is formed by a layer structure, which layer structure comprises a first electrically conductive layer (26) of the sealing foil (6), a second electrically conductive layer (27) of the sealing foil (6), and an electrically insulating layer (28) of the sealing foil (6), which is arranged between the first electrically conductive layer (26) and the second electrically conductive layer (27),
- having an evaluation and control device (55) for evaluating the measuring result, in particular for comparing a measured value with a reference value, and for controlling the torque applied to the screw closure by the closing means (51) on the basis of the measuring result.

2. Machine (50) for applying a screw closure (8) to a container, the mouth (7) of which is closed with a sealing foil (6), having a closing means (51) for applying a torque to the screw closure, and having a device (52) according to Claim 1.

3. Use of a sealing foil (6) for sealing the mouth (7) of open containers, in particular glass vessels (1), wherein the sealing foil (6) has a layer structure, which layer structure comprises a first electrically conductive layer (26), a second electrically conductive layer (27), and an electrically insulating layer (28), which is arranged between the first electrically conductive layer (26) and the second electrically conductive layer (27), in such a way that the layer structure forms a capacitor (30), wherein the electrically insulating layer (28) is compressed by means of a screw closure that can be screwed onto the mouth (7) and loads the sealing foil (6) mechanically in such a way that the capacitance of the capacitor (30) changes.

4. Method for controlling a machine (50) for applying a screw closure to a container (1), the mouth (7) of which is closed with a sealing foil (6), **characterized by**
- an application of a torque to the screw closure with the aid of a closing means (51),
- a contactless measurement of the capacitance of a capacitor (30) and/or a property of a system that is influenced by a capacitor (30) or interacts with a capacitor (30), in particular for measuring the intensity of the influence of such a capacitor (30) on a measuring field; wherein the capacitor (30) is formed by a layer structure, which layer structure comprises a first electrically conductive layer (26) of the sealing foil (6), a second electrically conductive layer (27) of the sealing foil (6), and an electrically insulating layer (28) of the sealing foil (6), which is arranged between the first electrically conductive layer (26) and the second electrically conductive layer (27),
- an evaluation of the measuring result, in particular a comparison of the measured value with a reference value, and control of the torque applied to the screw closure by the closing means on the basis of the measuring result, with the aid of an evaluation and control device (55).

5. Method according to Claim 4, **characterized in that** during the measurement, the electrically insulating layer (28) is compressed with the aid of the screw closure, loading the sealing foil (6) mechanically, in such a way that the capacitance of the capacitor (30) changes.

6. Device (54) for verifying the application of a screw closure to a container, the mouth (7) of which is closed with a sealing foil (6), **characterized by**
- a measuring device (33) for the contactless measurement of the capacitance of a capacitor (30) and/or a property of a system that is influenced by a capacitor (30) or interacts with a capacitor (30), in particular for measuring the intensity of the influence of such a capacitor (30) on a measuring field; wherein the capacitor (30) is formed by a layer structure, which layer structure comprises a first electrically conductive layer (26) of the sealing foil (6), a second electrically conductive layer (27) of the sealing foil (6), and an electrically insulating layer (28) of the sealing foil (6), which is arranged between the first electrically conductive layer (26) and the second electrically conductive layer (27),
and
- an evaluation device (56), designed to evaluate the measuring result, in particular to compare a measured value with a reference value.

7. Method for verifying the application of a screw closure to a container (1), the mouth (7) of which is closed with a sealing foil (6), **characterized by**
- a contactless measurement of the capacitance of a capacitor (30) and/or a property of a system that is influenced by a capacitor (30) or interacts with a capacitor (30), in particular for measuring the intensity of the influence of such a capacitor (30) on a measuring field; wherein the capacitor (30) is formed by a layer structure, which layer structure comprises a first electrically conductive layer (26) of the sealing foil (6), a second electrically conductive layer (27) of the sealing foil (6), and an electrically insulating layer (28) of the sealing foil (6), which is arranged between the first electrically conductive layer (26) and the second electrically conductive layer (27),
and
- an evaluation of the measuring result, in particular a comparison of a measured value with a reference value.

8. Method according to Claim 7, **characterized in that** before the measurement, the electrically insulating layer (28) is compressed with the aid of a screw closure that can be screwed onto the mouth (7) and loads the sealing foil (6) mechanically in such a way that the capacitance of the capacitor (30) changes.

## Revendications

1. Ensemble (52) de commande d'une machine (50) qui applique un couvercle fileté sur un récipient (1) dont l'embouchure (7) est fermée par une feuille de scellement (6), la machine (50) comportant un dispositif de fermeture (51) qui exerce un couple de rotation sur le couvercle fileté, l'ensemble présentant
un dispositif de mesure (33) qui mesure sans contact la capacité d'un condensateur (30) et/ou une propriété d'un système influencé par un condensateur (30) ou interagissant avec un condensateur (30), en particulier pour mesurer l'intensité de l'influence d'un tel condensateur (30) sur un champ de mesure, le condensateur (30) étant formé par une structure stratifiée, la structure stratifiée comprenant une première couche électriquement conductrice (26) de la feuille de scellement (6), une deuxième couche électriquement conductrice (27) de la feuille de scellement (6) et une couche électriquement isolante (28) de la feuille de scellement (6) disposée entre la première couche électriquement conductrice (26) et la deuxième couche électriquement conductrice (27),
un dispositif d'évaluation et de régulation (55) qui évalue le résultat de mesure et en particulier qui compare une valeur de mesure à une valeur de référence et qui régule en fonction du résultat de mesure le couple de rotation exercé sur la fermeture filetée par le dispositif de fermeture (51).

2. Machine (50) destinée à appliquer un couvercle fileté (8) sur un récipient dont l'embouchure (7) est fermée par une feuille de scellement (6), la machine présentant un dispositif de fermeture (51) qui exerce un couple de rotation sur le couvercle fileté et un ensemble (52) selon la revendication 1.

3. Utilisation d'une feuille de scellement (6) pour sceller l'embouchure (7) de récipients ouverts, en particulier de récipients (1) en verre, la feuille de scellement (6) présentant une structure stratifiée, la structure stratifiée présentant une première couche électriquement conductrice (26), une deuxième couche électriquement conductrice (27) et une couche électriquement isolante (28) disposée entre la première couche électriquement conductrice (26) et la deuxième couche électriquement conductrice (27) de telle sorte que la structure stratifiée forme un condensateur (30), la couche électriquement isolante (28) étant comprimée au moyen d'un couvercle fileté apte à être vissé sur l'embouchure (7) et appliquant une force mécanique sur la feuille de scellement (6) de telle sorte que la capacité du condensateur (30) se modifie.

4. Procédé de commande d'une machine (50) d'application d'un couvercle fileté sur un récipient (1) dont l'embouchure (7) est fermée par une feuille de scellement (6),
**caractérisé par** les étapes qui consistent à :
exercer un couple de rotation sur le couvercle fileté à l'aide d'un dispositif de fermeture (51),
mesurer sans contact la capacité d'un condensateur (30) et/ou une propriété d'un système influencé par un condensateur (30) ou interagissant avec un condensateur (30), en particulier pour mesurer l'intensité de l'influence d'un tel condensateur (30) sur un champ de mesure, le condensateur (30) étant formé par une structure stratifiée, la structure stratifiée comprenant une première couche électriquement conductrice (26) de la feuille de scellement (6), une deuxième couche électriquement conductrice (27) de la feuille de scellement (6) et une couche électriquement isolante (28) de la feuille de scellement (6) disposée entre la première couche électriquement conductrice (26) et la deuxième couche électriquement conductrice (27),
évaluer le résultat de mesure et en particulier comparer une valeur de mesure à une valeur de référence et réguler en fonction du résultat de mesure le couple de rotation exercé sur la fermeture filetée par le dispositif de fermeture, à l'aide d'un dispositif d'évaluation et de régulation (55).

5. Procédé selon la revendication 4, **caractérisé en ce que** pendant la mesure, la couche électriquement isolante (28) est comprimée à l'aide du couvercle fileté qui applique une force mécanique sur la feuille de scellement (6) de telle sorte que la capacité du condensateur (30) se modifie.

6. Ensemble (54) de vérification de l'application d'un couvercle fileté sur un récipient dont l'embouchure (7) est fermée par une feuille de scellement (6),
**caractérisé par**
un dispositif de mesure (33) qui mesure sans contact la capacité d'un condensateur (30) et/ou une propriété d'un système influencé par un condensateur (30) ou interagissant avec un condensateur (30), en particulier pour mesurer l'intensité de l'influence d'un tel condensateur (30) sur un champ de mesure, le condensateur (30) étant formé par une structure stratifiée, la structure stratifiée comprenant une première couche électriquement conductrice (26) de la feuille de scellement (6), une deuxième couche électriquement conductrice (27) de la feuille de scellement (6) et une couche électriquement isolante (28) de la feuille de scellement (6) disposée entre la première couche électriquement conductrice (26) et la deuxième couche électriquement conductrice (27) et
un dispositif d'évaluation (56) qui évalue le résultat de mesure et en particulier qui compare une valeur de mesure à une valeur de référence.

7. Procédé de vérification de l'application d'un couvercle fileté sur un récipient (1) dont l'embouchure (7) est fermée par une feuille de scellement (6), le procédé étant **caractérisé par** les étapes qui consistent à :
mesurer sans contact la capacité d'un condensateur (30) et/ou une propriété d'un système influencé par un condensateur (30) ou interagissant avec un condensateur (30), en particulier pour mesurer l'intensité de l'influence d'un tel condensateur (30) sur un champ de mesure, le condensateur (30) étant formé par une structure stratifiée, la structure stratifiée comprenant une première couche électriquement conductrice (26) de la feuille de scellement (6), une deuxième couche électriquement conductrice (27) de la feuille de scellement (6) et une couche électriquement isolante (28) de la feuille de scellement (6) disposée entre la première couche électriquement conductrice (26) et la deuxième couche électriquement conductrice (27) et
évaluer le résultat de mesure et en particulier comparer une valeur de mesure à une valeur de référence.

8. Procédé selon la revendication 7, **caractérisé en ce que** la couche électriquement isolante (28) est comprimée avant la mesure à l'aide d'un couvercle fileté qui peut être vissé sur l'embouchure (7) et qui applique une force mécanique sur la feuille de scellement (6) de telle sorte que la capacité du condensateur (30) se modifie.
